# EUROPÄISCHE PATENTANMELDUNG

(11) **EP 1 236 659 A2**
(43) Veröffentlichungstag der Anmeldung: **04.09.2002**
(21) Anmeldenummer: 02010427.9
(22) Anmeldetag: 17.03.1999
(51) Int. Cl.: B65G 1/137, B65G 1/02

(54) **Regal, insbesondere einer Kommissionieranlage**

(30) Priorität: 20.03.1998 DE 19812147
(62) Teilanmeldung aus: 99923383.6
(71) Anmelder: Knapp Logistik Automation GmbH, 8075 Hart bei Graz (AT)
(72) Erfinder: Freudelsperger, Karl, 8075 Hart bei Graz (AT)
(74) Vertreter: Hanke, Hilmar

(57) **Zusammenfassung**

Bei einem Regal, insbesondere einer Kommissionieranlage, mit einer oder mehreren übereinander angeordneten Ebenen zur Aufnahme von Artikeln, wird vorgeschlagen, in jeder Ebene nebeneinander angeordnete Winkelbleche (14) anzuordnen. Jedes Winkelblech (14) ist doppelt geneigt und bildet eine im Querschnitt rechtwinklige und in Längsrichtung schräge Rinne mit einer Längsneigung (a) aus, wobei die Winkelwurzel in jedem Längsquerschnitt der Rinne an tiefster Stelle liegt und beide Winkelschenkelflächen Anschlagflächen für einen aufgenommenen Artikel sind.

## Beschreibung

Die Erfindung betrifft ein Regal, insbesondere einer Kommissionieranlage, mit einer oder mehreren übereinander angeordneten Ebenen zur Aufnahme von Artikeln, sowie eine Kommissionieranlage mit zumindest einem vorgenannten Regal.

Aufgabe der Erfindung ist die Schaffung eines Regals insbesondere einer Kommissionieranlage, welches mit Hilfe einfacher Mittel ein wirkungsvolles Handhaben von Artikeln ermöglicht.

Gelöst wird die der Erfindung zugrundeliegende Aufgabe durch die im Anspruch 1 angegebenen Mittel.

Vorteilhaft weitergebildet wird der Erfindungsgegenstand durch die Merkmale der Ansprüche 2 bis 8.

Eine erfindungsgemäße Kommissionieranlage kennzeichnet sich durch die Merkmale des Anspruchs 9.

Ein erfindungsgemäß gestaltetes Regal, z. B. ein Vorratsregal, besitzt in ein oder mehreren übereinander angeordneten Ebenen jeweils nebeneinander angeordnete Winkelbleche.

Jedes Winkelblech ist in besonders hervorzuhebender Weise doppelt geneigt, dergestalt, daß eine im Querschnitt rechtwinklige und in Längsrichtung schräge Rinne ausgebildet ist, wobei die Winkelwurzel in jedem Längsquerschnitt der Rinne an tiefster Stelle liegt und beide Winkelschenkelflächen Anschlagflächen für einen aufgenommenen Artikelstapel sind, und ferner am tiefsten Rinnenende ein lösbarer, vorzugsweise niederdrückbarer Artikelanschlag vorgesehen ist.

Der lösbare Artikelanschlag kann nicht nur fremdbetätigt, sondern eigenbetätigt sein, z.B. durch einen Magneten. Auch kann der Artikelanschlag starr sein. In diesem Fall werden bei einer Verschiebung eines Artikelstapels die Artikel mit einer geeigneten Vorrichtung darüber gehoben.

In einer Erfindungsvariante beträgt die Neigung der Rinne in Längsrichtung ca. 20° und die Neigung der Rinnenbasisfläche in Querrichtung ca. 15°. Je schräger die Rinnenneigung in Längsrichtung, desto größer die eigenständige Rutschfähigkeit des auflastenden Artikelstapels in der Rinne. Es hat sich gezeigt, daß im praktischen Betrieb bei vorgenannten Neigungsgrößen ein Artikelstapel mit Vorteil hinter- bzw. oberseitig mit einem Rollwagen stabil gehalten wird und zufriedenstellend in der Rinne rutscht, wenn eine Artikelstapel-Verlagerung im System der Kommissionieranlage vorgenommen wird. Die Querneigung von 15° fixiert einen Artikelstapel immer in der Winkelwurzel der Rinne.

Es kann also eine Längsfixierungshilfe in der Rinne vorgesehen sein, welcher den Artikelstapel gegen den Artikelanschlag drückt.

Die Längsfixierungshilfe ist zweckmäßigerweise der Rollwagen, ein längsverstellbarer angetriebener Artikelanschlag oder ein federvorgespannter Artikelanschlag.

Es sei hervorgehoben, daß in der vorgenannten winkligen doppelt geneigten Rinne unterschiedliche Artikelgrößen als Stapel in der Winkelwurzel fixiert gehalten werden können. Es genügt kubische Form. Mithin kann ein einziges Winkelblech für unterschiedliche Artikel verwendet werden, ohne daß die Gesamtanlage umgebaut werden muß.

Das (Vorrats-)Regal kann ein Übervorratsregal sein, welches beispielsweise einem Schnelldrehautomaten zugeordnet ist und sich vorzugsweise in der Nähe eines Artikelregals des Schnelldrehautomaten befindet.

Das (Vorrats-)Regal kann aber auch ein Zwischenpuffer sein, welcher dem Wareneingang zugeordnet ist und sich vorzugsweise in der Nähe einer Auspackstation befindet, an welcher die Artikelstapel aus einem Überkarton ausgepackt und zusammengestellt werden.

Bevorzugt sind sowohl ein oder mehrere Übervorratsregale als auch ein oder mehrere Zwischenpuffer je nach Größe der Kommissionieranlage und örtliche Raumbedingungen vorhanden, wie auch mehrere Schnelldrehautomaten vorhanden sein können.

Die ausgepackten Artikelstapel werden zweckmäßigerweise auf einer Artikelstapel-Ablage zusammengestellt, welche die Form eines Teiles zumindest einer Regalebene des Vorratsregals aufweist, d.h. Winkelbleche sind, wobei ein Regalbediengerät für eine Artikelstapel-Übernahme durch Verschieben auch zur Artikelstapel-Ablage über ein Schienen- bzw. Führungssystem verfahrbar und bei dieser Artikelstapel-Ablage, d.h. bei einem seitlichen Ende eines Winkelblechs, positionierbar ist.

Die Artikelstapel-Ablage kann auch ein höhenverstellbares Regal mit herausziehbaren Schubladen sein, welche manuell oder automatisch bedienbar sein können.

Das (Vorrats-)Regal kann auch ein platzsparendes Doppelregal sein, welches Rücken an Rücken angeordnet ist.

Eine Kommissionieranlage kennzeichnet sich insbesondere dadurch, daß die Artikelstapel-Aufnahme des Regalbediengeräts, die Schacht- bzw. Winkelblechausbildung des Übervorratsregals, des Zwischenpuffers und der Artikelstapel-Ablage beim Wareneingang hinsichtlich Länge, Breite und gegebenenfalls Neigung (Längsneigung, Querneigung) gleich ausgebildet sind.

Die Winkelblechausführung des Übervorratsregals kann aber auch unterschiedlich groß ausgebildet sein. Vorzugsweise bestimmt man möglichst wenig Klassen, um unterschiedlich große Artikel möglichst dicht einlagern zu können, wobei die Artikelstapel-Aufnahme des Regalbediengeräts immer gleich bleibt (entsprechend der größten Rasterung).

Durch die Erfindung kann auf gesonderte Artikelstapel-Magazine verzichtet werden. Derartige Magazine brauchen mithin weder produziert, noch einem besonderen Artikelstapel angepaßt, noch innerhalb des Systems der Kommissionieranlage befördert, insbesondere von einem Schnelldrehautomaten zum normalerweise weit entfernten Wareneingang als Leergut zurückgefördert werden.

Die Erfindung wird nachfolgend anhand von Ausführungsbeispielen unter Bezugnahme auf die beigefügte Zeichnung näher beschrieben; es zeigen:
- Fig. 1: eine Kommissionieranlage mit Schnelldrehautomaten, schienengebundenen Regalbediengeräten, Übervorratsregalen, Zwischenpuffer und Auspackstation in einer schematischen Draufsicht,
- Fig. 2: eine Kommissionieranlage im Bereich der Auspackstation in einer schematischen Draufsicht ähnlich Figur 1,
- Fig. 3: einen Schnelldrehautomat, ein Übervorratsregal und ein Regalbediengerät in der dazwischenliegenden Regalgasse schematisch in einer Stirnansicht,
- Fig. 4: einen Teil des Übervorratsregals nach Fig. 3 gesehen in einer schematischen Seitenansicht von der Regalgasse,
- Fig. 5: eine Auspackstation mit Zwischenpuffer und dazwischen angeordnetem Regalbediengerät in einer schematischen Vertikalansicht ähnlich Fig. 3,
- Fig. 6: die Auspackstation nach Fig. 5 gesehen schematisch von oben,
- Fig. 7: einen Andockvorgang an ein Übervorratsregal schematisch in einem vertikalen Teilschnitt,
- Fig. 8: eine Auspackstation mit Zwischenpuffer in einer schematischen Vertikalansicht ähnlich Fig. 5, und
- Fig. 9: die Auspackstation nach Fig. 8 in einer schematischen Draufsicht.

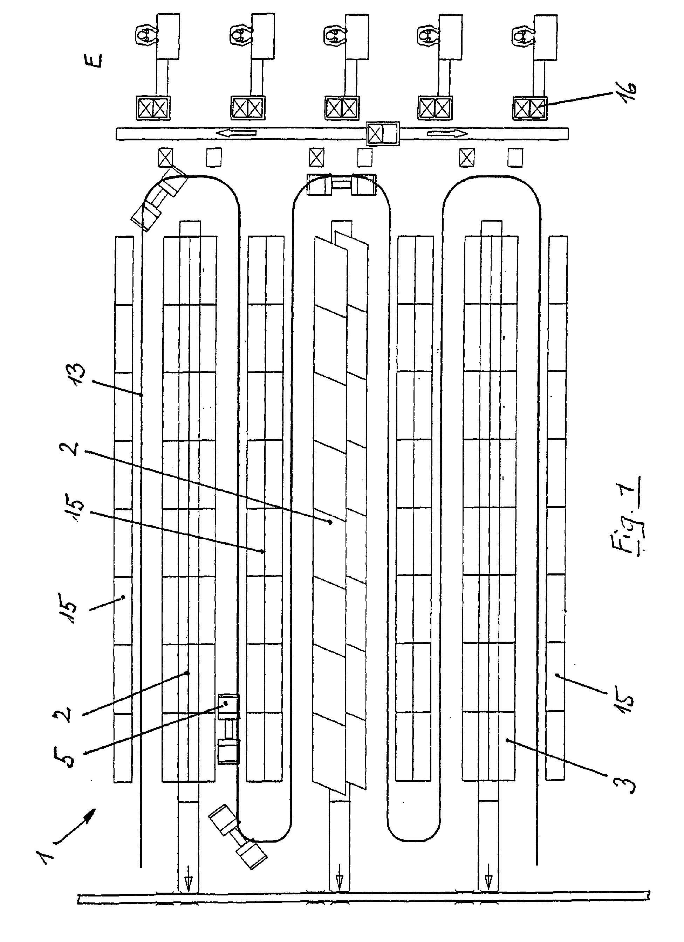

In Fig. 1 ist schematisch in Draufsicht eine Kommissionieranlage 1 mit drei Schnelldrehautomaten 2, vier Übervorratsregalen 15 und fünf Arbeitsplätzen am Wareneingang E mit Artikelstapel-Ablagen und Zwischenpuffer 16 gezeigt, wobei über ein Führungs- bzw. Schienensystem 13 vier Regalbediengeräte 5 zwischen den einzelnen Bereichen verfahrbar sind.

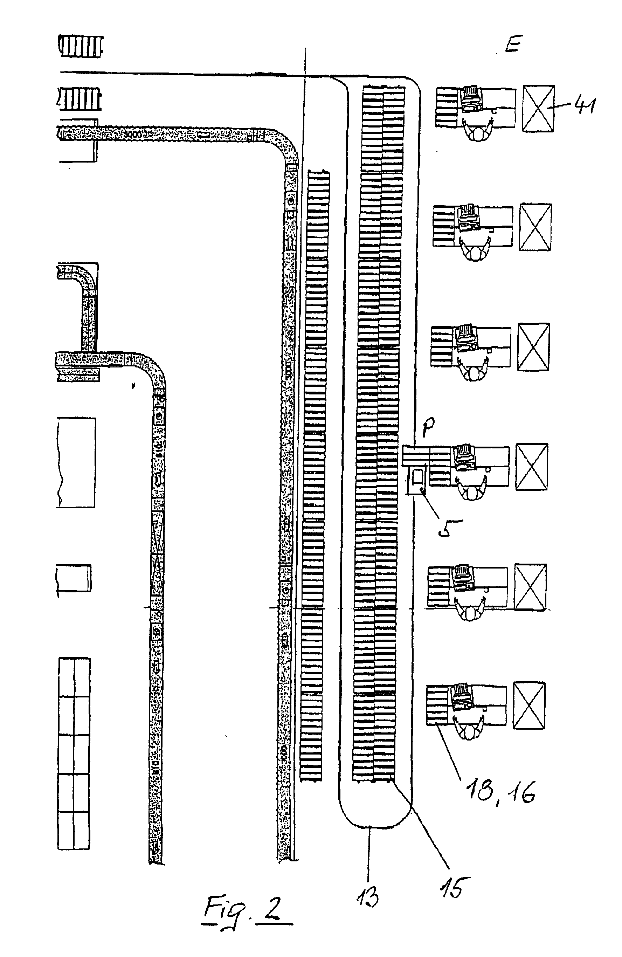

Eine weitere Variante des Systems ist bezüglich des Wareneingangs E in Fig. 2 gezeigt.

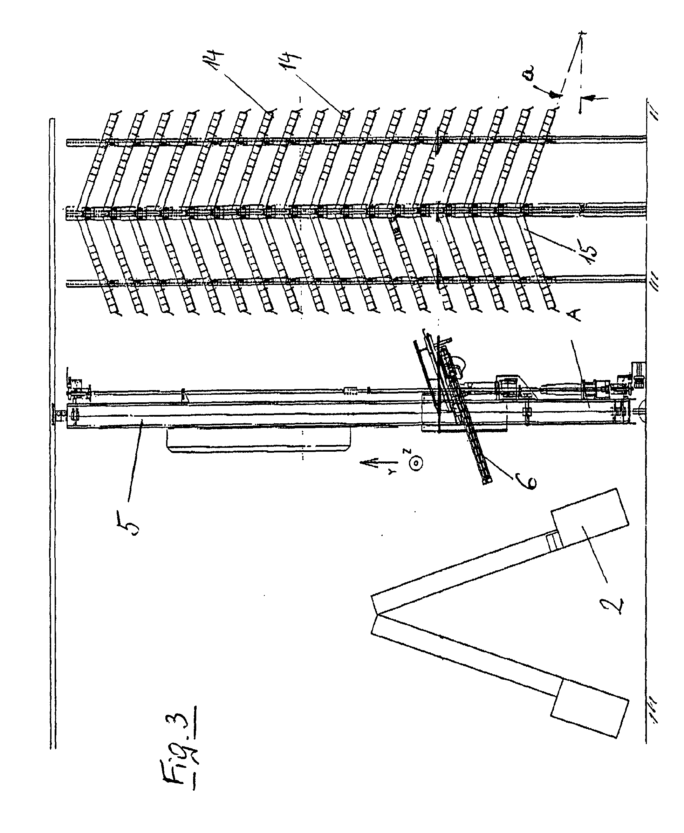

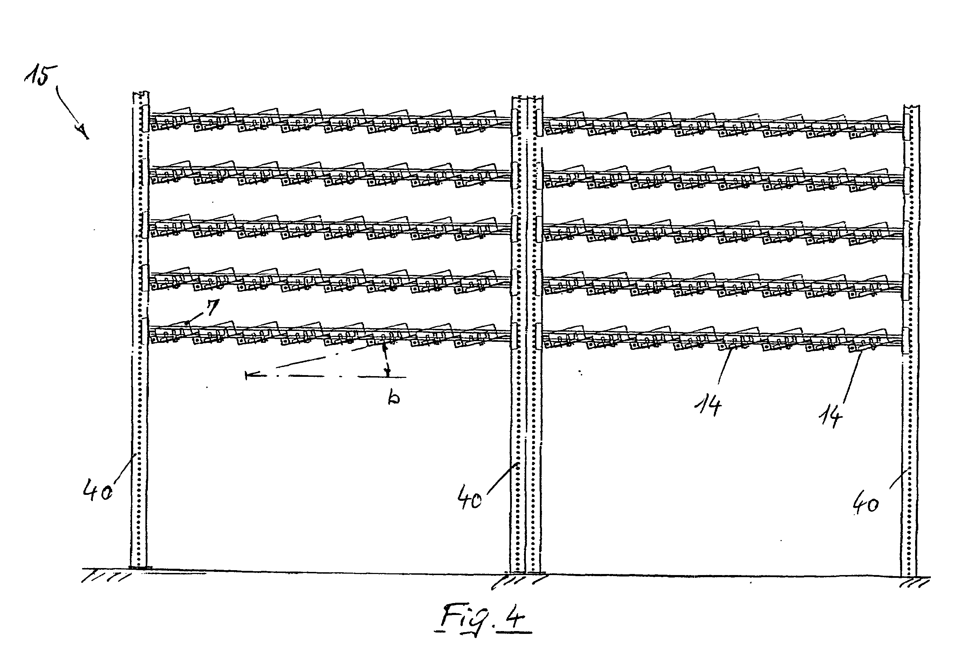

Jedes (Vorrats-)Regal, sowohl Übervorratsregal 15 als auch der Zwischenpuffer 16, besitzt den gleichen Grundaufbau in Form eines Stativs 40 mit vier Stehern und mehreren Regalebenen in Form von neben einander angeordneten doppelt geneigten Winkelblechen 14, wie dies insbesondere den Fig. 3, 4 und 5 zu entnehmen ist.

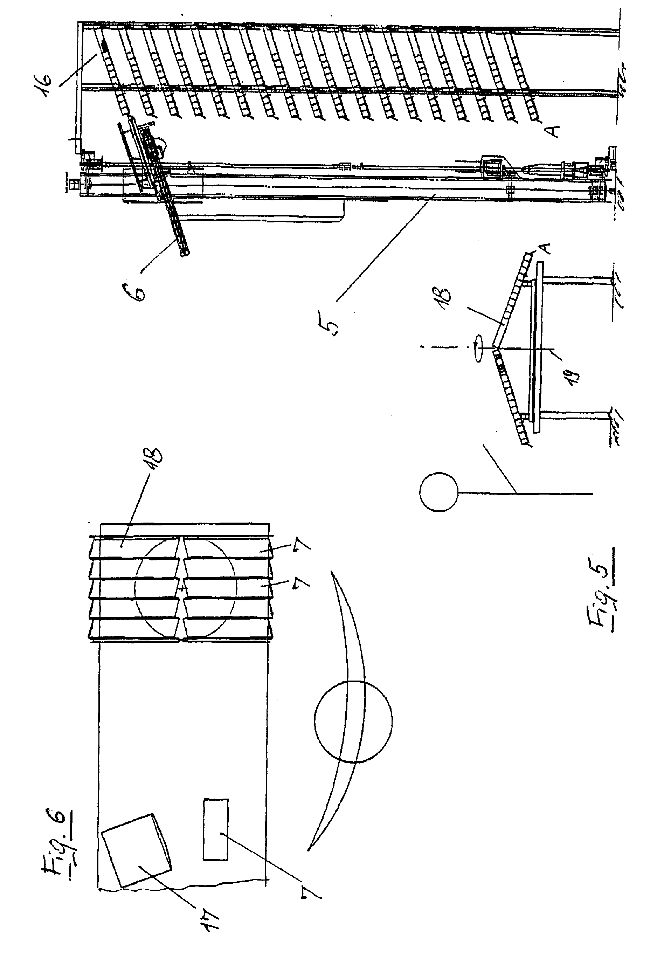

Entsprechend ist auch die Artikelstapel-Ablage 18 beim Wareneingang E konzipiert, wobei diese nur in einer einzigen Regalebene liegt und zwei Ablagen 18 Rücken an Rücken angeordnet sein können, wie dies insbesondere den Fig. 5 und 6 zu entnehmen ist.

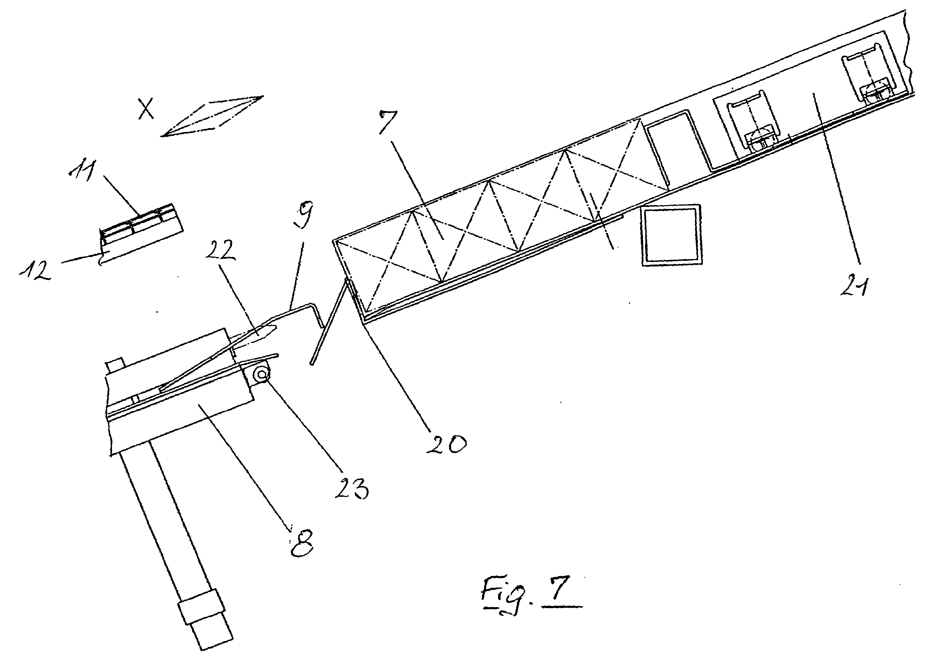

Ein doppelt geneigtes Winkelblech 14 bildet eine im Querschnitt rechtwinklige und in Längsrichtung schräge Rinne, wobei die Winkelwurzel in jedem Längsquerschnitt der Rinne an tiefster Stelle liegt und beide Winkelschenkelflächen Anschlagflächen für einen aufgenommenen Artikelstapel 7 sind, und ferner am tiefsten Rinnenende ein lösbarer, vorzugsweise niederdrückbarer Artikelanschlag 20 vorgesehen ist, wie dies in Fig. 7 gezeigt ist.

Die Neigung a der Rinne in Längsrichtung beträgt 19°. Die Neigung b der Rinnenbasisfläche in Querrichtung 15°.

Ein in der Rinne aufgenommener Artikelstapel 7 kann eine Längsfixierungshilfe aufweisen, insbesondere einen Rollwagen 21 nach Fig. 7, welcher den Artikelstapel gegen den Artikelanschlag 20 drückt.

Wie ein doppelt geneigtes Winkelblech, so ist auch die bodenseitige Artikelstapel-Aufnahme 8 der Artikelhandhabe-Einheit des Regalbediengeräts geneigt, und zwar in der Grundstellung bei einem Transport eines Artikelstapels von Regal zu Regal und bei einer Verschiebung eines Artikelstapels in Stapelrichtung von Regal zu Regal.

Jedes Regalbediengerät 5 ist über das Führungs- bzw. Schienensystem 13 von und zu zumindest einem Vorratsregal verfahrbar und bei einem ausgewählten seitlichen Ende A eines Schachts des Vorratsregals, nämlich bei einem Winkelblech 14 stirnseitig positionierbar ist.

Mit besonderem Bezug auf die Fig. 7 gelangt bei jedem ausgewählten Winkelblech ein einziger zu handhabender Artikelstapel 7 durch Verschieben in Stapelrichtung auf eine ausgerichtete Artikelaufnahme 8 der Artikelhandhabe-Einheit (und umgekehrt).

Der Stütz- bzw.Rollwagen 21 bringt bis zu dieser Position ständig seine Kraft auf den Stapel ein, um ein Kippen oder Zurückbleiben der letzten Artikel zu verhindern.

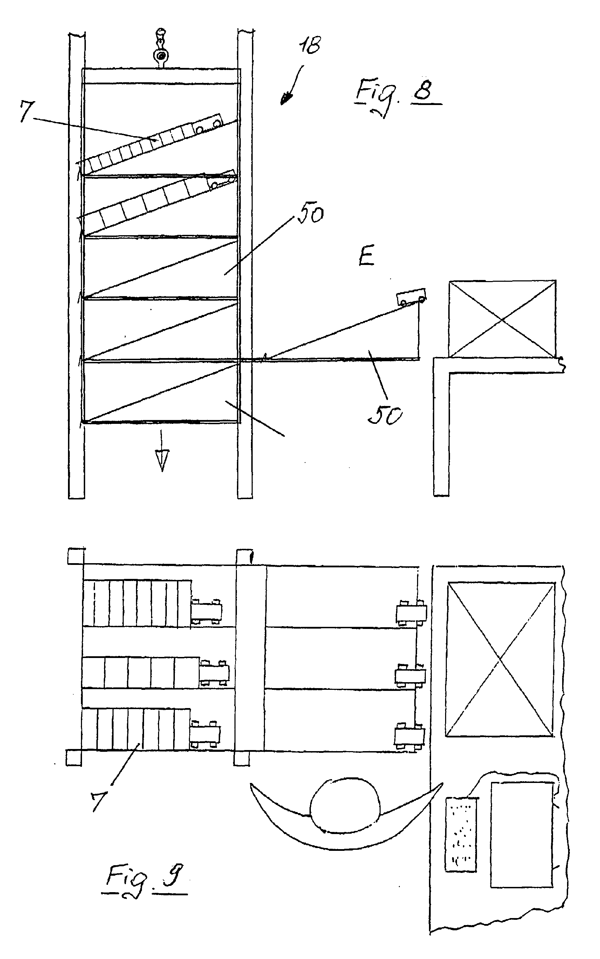

Eine Auspackstation gemäß den Fig. 8 und 9 stellt sich folgendermaßen dar:

Die Artikelstapel-Ablage 18 umfaßt ein vertikal verschiebbares Regal mit horizontal beweglichen Schubladen 50, welche manuell in den Bereich E einer Bedienungsperson herausgezogen werden können. Das vertikal verschiebbare Regal fährt hierbei mit einer freien Ebene auf Arbeitsplatzniveau. Manuell wird die leere Schublade 50 gemäß Zeichnung nach rechts gezogen, worauf man z.B. drei Kanäle in Form von doppelt geneigten Winkelblechen mit jeweils einem Artikelstapel 7 befüllen und oberseitig gemäß Zeichnung rechts jeden Artikelstapel mit einem Rollwagen stabilisieren kann. Danach wird die befüllte Schublade in das Regal zurückgestellt. Per Hand- oder Fußtaster wird dann das Regal in der Höhe (oder seitlich) verstellt, dergestalt, daß die nächste freie Schublade auf Arbeitsniveau gelangt. Das Aus- und Einfahren der Schubladen sowie die Regalverstellung in Höhen- und/ oder in Seitenrichtung kann insgesamt auch automatisch erfolgen.

## Patentansprüche

1. Regal, insbesondere einer Kommissionieranlage, mit einer oder mehreren übereinander angeordneten Ebenen zur Aufnahme von Artikeln,
**dadurch gekennzeichnet,**
**daß** jede Ebene nebeneinander angeordnete Winkelbleche (14) besitzt, und jedes Winkelblech (14) doppelt geneigt ist und eine im Querschnitt rechtwinklige und in Längsrichtung schräge Rinne mit einer Längsneigung (a) ausbildet, wobei die Winkelwurzel in jedem Längsquerschnitt der Rinne an tiefster Stelle liegt und beide Winkelschenkelflächen Anschlagflächen für einen aufgenommenen Artikel sind.

2. Regal nach Anspruch 1,
**dadurch gekennzeichnet,**
**daß** die Längsneigung (a) der Rinne ein eigenständiges Rutschen von Artikeln in der Rinne ermöglicht.

3. Regal nach Anspruch 1 oder 2,
**dadurch gekennzeichnet,**
**daß** eine der Winkelschenkelflächen, nämlich die Rinnenbasisfläche, eine Querneigung (b) von ca. 15° besitzt.

4. Regal nach einem der Ansprüche 1 bis 3,
**dadurch gekennzeichnet,**
**daß** die Längsneigung (a) der Rinne ca. 20° beträgt.

5. Regal nach einem der Ansprüche 1 bis 4,
**dadurch gekennzeichnet,**
**daß** die Winkelbleche unterschiedlich groß ausgebildet sind.

6. Regal nach einem der Ansprüche 1 bis 5,
**dadurch gekennzeichnet,**
**daß** am tiefsten Rinnenende (A) ein fester oder lösbarer, vorzugsweise niederdrückbarer Artikelanschlag (20) vorgesehen ist.

7. Regal nach einem der Ansprüche 1 bis 6,
**dadurch gekennzeichnet,**
**daß** ein in der Rinne aufgenommener Artikelstapel (7) eine Längsfixierungshilfe aufweist, welche den Artikelstapel gegen den Artikelanschlag (20) drückt.

8. Regal nach Anspruch 7,
**dadurch gekennzeichnet,**
**daß** die Längsfixierungshilfe ein Rollwagen (21), ein längsverstellbarer angetriebener Artikelanschlag oder ein federvorgespannter Artikelanschlag ist.

9. Kommissionieranlage mit zumindest einem Regal nach einem der vorhergehenden Ansprüche,
**dadurch gekennzeichnet,**
**daß** eine Artikelstapel-Aufnahme (8) eines Regalbediengeräts (5), die Winkelblechausbildung eines Übervorratsregals (15), eines Zwischenpuffers (16) und einer Artikelstapel-Ablage (18) beim Wareneingang (E) hinsichtlich Längsneigung (a) und Querneigung (b) gleich ausgebildet sind.
